# EUROPEAN PATENT SPECIFICATION

(11) **EP 3 008 076 B1**
(45) Date of publication and mention of the grant of the patent: **20.05.2020**
(21) Application number: 14730485.1
(22) Date of filing: 02.06.2014
(51) Int. Cl.: C07F 9/655, C07F 9/40, C09K 21/00, C08K 5/5313

(54) **REACTIVE FLAME RETARDANTS**
REAKTIVE FLAMMSCHUTZMITTEL
AGENTS IGNIFUGES RÉACTIFS

(30) Priority: 14.06.2013 EP 13172114
(43) Date of publication of application: 20.04.2016
(73) Proprietor: BASF SE, 67056 Ludwigshafen am Rhein (DE)
(72) Inventor: RHUDY, Kevin, Woodbury, Washington 55129 (US); KRÄMER, Roland Helmut, 68165 Mannheim (DE); HUPKA, Birgit, 40589 Düsseldorf (DE); KÖNIG, Alexander, 76646 Bruchsal (DE); FLECKENSTEIN, Christoph, 63579 Freigericht (DE); KÖNIG, Christian, 68165 Mannheim (DE); HERBST, Heinz, 79541 Lörrach (DE)
(74) Representative: BASF IP Association
(86) International application number: PCT/EP2014/061333
(87) International publication number: WO 2014/198573

(56) References cited:
- EP-A1- 1 544 227
- EP-A1- 1 854 827
- DE-A1- 1 495 385
- GB-A- 1 110 600
- GB-A- 1 183 518
- GB-A- 1 287 329
- US-A- 3 485 897
- KAKATI D K ET AL: "New polyurethane ionomers containing phosphonate groups", POLYMER, ELSEVIER SCIENCE PUBLISHERS B.V, GB, vol. 35, no. 2, 1 January 1994 (1994-01-01), pages 398-402, XP024121916, ISSN: 0032-3861, DOI: 10.1016/0032-3861(94)90710-2 [retrieved on 1994-01-01]
- BOULOS YOUSSEF ET AL: "New Phosphonated Methacrylates: Synthesis, Photocuring and Study of their Thermal and Flame-Retardant Properties", MACROMOLECULAR CHEMISTRY AND PHYSICS, vol. 204, no. 15, 1 October 2003 (2003-10-01), pages 1842-1850, XP055081886, ISSN: 1022-1352, DOI: 10.1002/macp.200300025

## Description

The present invention relates to a process for the preparation of a polyurethane using a phosphorus containing alcohol, obtainable or obtained by a process comprising the reaction of at least one alcohol with a phosphorus containing compound of the general formula (I) as defined herein, and the polyurethane as such. Furthermore, the present invention relates to the use of a phosphorus containing alcohol as disclosed herein as a flame retardant.

There are many different methods for providing flame retardancy to polymers, in particular polyurethanes, and very particularly polyurethane foams. A first method is formation of a char to prevent the heat and the flame from reaching the combustible material. Thermal hydrolysis products remove oxygen from the polymer matrix and lead to formation of a layer of carbon on the surface of the polymer. This layer of carbon prevents the flame from causing either thermal or oxidative decomposition of the plastic located below the layer. Phosphorus-containing compounds, and among these organophosphorus compounds, are widely used to form a carbonized char in the event of a fire. Organophosphorus flame retardants are mostly based on phosphate esters, on phosphonate esters, phosphinate esters or on phosphite esters and salts.

A second method for providing flame retardancy is the gas phase mechanism. Low-reactivity free radicals from the flame retardant scavenge various high-reactivity free radicals derived from degradation products of the polymer, thus inhibiting fire propagation by way of free radicals. Halogen flame retardants like Bromine-containing flame retardants are particularly effective here. Another particularly effective flame retardant is trichloroisopropyl phosphate (TCPP), which comprises not only phosphate but also the halogen chlorine, and thus acts by way of both of the mechanisms described above. The gas phase effect can also be achieved by Phosphorous containing flame retardants in dependency to their structure and their oxidation state in particular.

However, halogenated flame retardants, in particular bromine-containing flame retardants, are undesirable for toxicological, environmental, and regulatory reasons. Halogen-containing flame retardants also increase smoke density in the event of a fire. Attempts are therefore being made to achieve general avoidance of halogen-containing flame retardants.

Examples of known halogen-free flame retardants are solid flame retardants such as melamine or ammonium polyphosphate. These solid particles have adverse effects on the polymers, in particular on the properties of polyurethane foams. Solid flame retardants also specifically cause problems during the production of the polyurethanes. By way of example, the production of polyurethanes preferably uses liquid starting materials, including those in the form of solutions. The use of solid particles leads to separation phenomena in the mixtures usually used for polyurethane production, and the life of batches is therefore limited. The solid flame retardant particles moreover abrade the metering units, for example in the foam plants. Said flame retardants also have an adverse effect on the chemical processes during the foaming process and have an adverse effect on the properties of the foam.

Many liquid flame retardants, such as triethyl phosphate (TEP) or diethyl ethane-phosphonate (DEEP), contribute by way of example to emissions from the plastics, giving them an unpleasant odor. The liquid flame retardants moreover have an adverse effect on the foaming reaction during the production of polyurethane foams, and also on the properties of the foams, for example mechanical properties. Known liquid flame retardants also frequently act as plasticizers.

In order to counter problems with emissions, incorporatable flame retardants have been developed for polyurethanes. Applicable flame retardants, such as Exolit®OP560 from Clariant, generally have functionality smaller or equal to 2 with respect to isocyanates and frequently reduce crosslinking density in polyurethane foams, thus impairing the properties of the foam, in particular in rigid polyurethane foam.

WO 2003/104374 A1, WO 2004/076509 A2, and WO 2005/052031 A1 describe the use of phosphonic-acid-reacted, hyperbranched polyacrylonitrile polyacrylamide, polyamide, and polyamine as rust preventer, lubricant, textile additive, and flame retardant. Said compounds are not suitable for use for polyurethanes and in particular polyurethane foams, since the nitrogen-containing structures severely affect the catalysis of the foam-formation process.

WO 2010/080425 A1 discloses a method of making hydroxymethylphosphonate comprising heating paraformaldehyde in a solvent to a desired reaction temperature, wherein the solvent is present in at least an amount necessary to solvate or suspend the paraformaldehyde; adding at least one alkyl phosphite to the heated paraformaldehyde, to provide hydroxymethylphosphonate, the alkyl phosphite being added to the heated paraformaldehyde at a rate which will avoid or inhibit the production of a significant exotherm and resulting high/significant level of acid byproduct(s), there being present in the reaction medium at least one hindered amine catalyst in which the nitrogen in the amine is directly bound to a secondary and/or tertiary carbon of an organic group; and, optionally, following the completion of the addition, heating the reaction mixture to an elevated temperature. The use of the products obtained for the preparation of polyurethanes is also disclosed. The polyurethanes obtained show problems with emission of formaldehyde.

In EP 474076 B1, Bayer AG describes highly branched polyphosphates as flame retardants for polycarbonates. The structure of these materials, made of aromatic dihydroxy compounds and of phosphonate esters or polyphosphorus compounds, gives them poor solubility in the polyols used for polyurethane production, and this makes it difficult to process this class of compound in polyurethanes.

WO 2007/066383 describes hyperbranched polyesters which were reacted with phosphorus compounds, such as 9,10-dihydro-9-oxa-10-phosphaphenanthrene 10-oxide, and also the use of these as flame retardants for resins. The low thermal and hydrolytic stability of the ester groups is disadvantageous.

DE 14 95 385 A1 discloses phosphorous containing alcohols having phosphorous content of 1 to 10 wt. % and a process to prepare phosphorus containing alcohols by polymerizing epoxyphosphonate under Friedel-Crafts conditions.

EP 1 554 227 A1 discloses phosphorous containing alcohols with a phosphorous content of 1 to 32 wt.% and a process to obtain said alcohols reacting a phosphorous containing reagent with an epoxide.

GB 1 183 518 A discloses a phosphorous containing alcohol with a phosphorous content of 11.9-15.4 % prepared by reacting a phosphorous containing compound with an alcohol.

It was therefore an object of the present invention to provide a halogen-free flame retardant which can also be used in the production of polyurethanes.

Another object of the present invention was to provide flame retardants whose use does not lead to emissions in polymers, in particular in polyurethanes, and specifically in polyurethane foams, and whose use in polymers, in particular in polyurethanes and specifically in polyurethane foams, does not lead to impairment of properties, in particular of mechanical properties.

These objects of the invention are achieved by a process for the preparation of a polyurethane comprising the reaction of at least one isocyanate (a), at least one polyol (b) and at least one phosphorus containing alcohol comprising at least one phosphorus-containing group, obtainable or obtained by a process comprising the reaction of at least one alcohol with a phosphorus containing compound of the general formula (I): 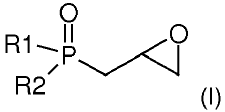 wherein
R1, R2 are equal or different linear or branched C₁-C₁₈-alkyl, linear or branched C₂-C₁₈-alkenyl, linear or branched C₂-C₁₈-alkinyl, C₃-C₁₀-cycloalkyl, C₆-C₁₀-aryl, heteroaryl, C₆-C₁₀-aryl-C₁-C₁₀-alkyl, benzyl, OR³, SR³, or R¹ and R² in combination with the P atom which they are bound to form a 4 to 8-membered ring system;
R³ is hydrogen, linear or branched C₁-C₁₆-alkyl, linear or branched C₂-C₁₆-alkenyl, linear or branched C₂-C₁₆-alkinyl, C₃-C₁₀-cycloalkyl, C₆-C₁₀-aryl, heteroaryl or C₆-C₁₀-aryl-C₁-C₁₀-alkyl, benzyl, and
wherein the at least one phosphorus-containing group is a group of the general formula (II): 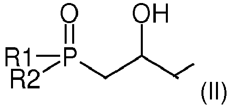 wherein
R1, R2 are equal or different linear or branched C₁-C₁₈-alkyl, linear or branched C₂-C₁₈-alkenyl, linear or branched C₂-C₁₈-alkinyl, C₃-C₁₀-cycloalkyl, C₆-C₁₀-aryl, heteroaryl, C₆-C₁₀-aryl-C₁-C₁₀-alkyl, benzyl, OR³, SR³, or R¹ and R² in combination with the P atom which they are bound to form a 4 to 8-membered ring system;
R³ is hydrogen, linear or branched C₁-C₁₆-alkyl, linear or branched C₂-C₁₆-alkenyl, linear or branched C₂-C₁₆-alkinyl, C₃-C₁₀-cycloalkyl, C₆-C₁₀-aryl, heteroaryl or C₆-C₁₀-aryl-C₁-C₁₀-alkyl, benzyl,
wherein the at least one alcohol is a polyol and
wherein the phosphorus containing alcohol has a phosphorus content of from 3 to 30 % by weight based on the total weight of the phosphorus containing alcohol,
wherein the polyol is selected from the group of the polyether polyols, polyester polyols, and mixtures thereof.

The phosphorus containing alcohols used according to the present invention can be prepared by a process for preparing a phosphorus containing alcohol, comprising the reaction of at least one alcohol with a phosphorus containing compound of the general formula (I): 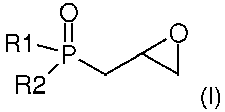 wherein
R1, R2 are equal or different linear or branched C₁-C₁₈-alkyl, linear or branched C₂-C₁₈-alkenyl, linear or branched C₂-C₁₈-alkinyl, C₃-C₁₀-cycloalkyl, C₆-C₁₀-aryl, heteroaryl, C₆-C₁₀-aryl-C₁-C₁₀-alkyl, benzyl, OR³, SR³, or R¹ and R² in combination with the P atom which they are bound to form a 4 to 8-membered ring system;
R³ is linear or branched C₁-C₁₆-alkyl, linear or branched C₂-C₁₆-alkenyl, linear or branched C₂-C₁₆-alkinyl, C₃-C₁₀-cycloalkyl, C₆-C₁₀-aryl, heteroaryl or C₆-C₁₀-aryl-C₁-C₁₀-alkyl, benzyl,
which is also subject of the present invention.

The synthesis is an easy one-step reaction based on cheap raw materials. Due to the diversity of alcohols which can be used as starting materials, a wide range of phosphorus containing alcohols can be easily obtained to adjust performance and processing as desired.

The alcohol used for the preparation of the phosphorus containing alcohols used according to the invention is a polyol wherein the polyol is selected from the group of the polyether polyols, polyester polyols, and mixtures thereof. In the context of the present invention, a polyol is defined as having at least two OH groups, for example two, three, four, five, six or more OH-groups.

The phosphorus containing alcohols according to the present invention work as flame retardants and at the same time can improve mechanical properties (or prevent deterioration of properties as observed with non-reactive flame retardants). The flame retardancy is not only influenced by the phosphorus content but also by the OH-functionality as well as the type of alcohol.

By varying the degree of partial functionalization, the hydroxyl-number of the resulting product can be adjusted to OH-values common either for flexible or for rigid foam. Thus the phosphorus containing alcohol can be easily blended with common polyols and show minimum interference on foaming. Thus tailor-made flame retardants for flexible and rigid polyurethane foams are provided.

The phosphorus containing alcohol used according to the present invention comprises at least one phosphorus-containing group. This at least one phosphorus-containing group is preferably a group of the general formula (II): 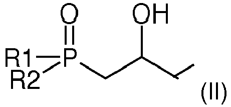 wherein
R1, R2 are equal or different linear or branched C₁-C₁₈-alkyl, linear or branched C₂-C₁₈-alkenyl, linear or branched C₂-C₁₈-alkinyl, C₃-C₁₀-cycloalkyl, C₆-C₁₀-aryl, heteroaryl, C₆-C₁₀-aryl-C₁-C₁₀-alkyl, benzyl, OR³, SR³, or R¹ and R² in combination with the P atom which they are bound to form a 4 to 8-membered ring system;
R³ is hydrogen, linear or branched C₁-C₁₆-alkyl, linear or branched C₂-C₁₆-alkenyl, linear or branched C₂-C₁₆-alkinyl, C₃-C₁₀-cycloalkyl, C₆-C₁₀-aryl, heteroaryl or C₆-C₁₀-aryl-C₁-C₁₀-alkyl, benzyl.

R1 and R2, identical or different, are preferably C1-C16-alkyl, C1-C16-alkoxy, C3-C10-cycloalkyl, C3-C10-cycloalkoxy, aryl or aryloxy.

It is particularly preferable that R1 and R2 are identical, each being phenyl, methoxy, ethoxy, isopropoxy, allyloxy, or R¹ and R² in combination with the P atom which they are bound to form a 4 to 8-membered ring system. R¹ and R² in combination with the P atom might for example be part of a 9,10-dihydro-9-oxa-10-phosphaphenanthren-10-oxide (3,4,5,6-Dibenzo-1,2-Oxaphosphan) of formula (III):

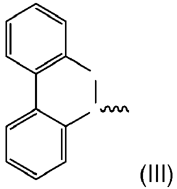

Depending on the alcohol used and the degree of functionalization, the phosphorus containing alcohol used according to the present invention can comprise one or more phosphorus containing groups of general formula (II) or - in case the group of general formula (II) is an acid group - metal salts thereof. Suitable metal salts are for example salts of aluminum, zinc, calcium, magnesium or titanium.

The phosphorus containing alcohol can also comprise two or more different phosphorus containing groups, preferably two or more different groups of the general formula (II). In case the phosphorus containing alcohol used according to the invention comprises two or more different phosphorus containing groups, generally two or more different compounds of general formula (I) are used for the preparation.

The phosphorus is preferably present in the form of phosphate, phosphonate or phosphinate groups or metal salts thereof.

According to a further embodiment, the present invention therefore is directed to a process as disclosed above, wherein the phosphorus is present in the form of phosphate, phosphonate or phosphinate groups or metal salts thereof.

To produce the phosphorus containing alcohols comprising at least one phosphorus-containing group, according to the present invention preferably at least one alcohol is reacted with a phosphorus containing compound of the general formula (I): 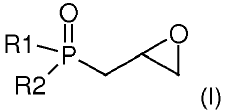 wherein
R1, R2 are equal or different linear or branched C₁-C₁₈-alkyl, linear or branched C₂-C₁₈-alkenyl, linear or branched C₂-C₁₈-alkinyl, C₃-C₁₀-cycloalkyl, C₆-C₁₀-aryl, heteroaryl, C₆-C₁₀-aryl-C₁-C₁₀-alkyl, benzyl, OR³, SR³, or R¹ and R² in combination with the P atom which they are bound to form a 4 to 8-membered ring system;
R³ is linear or branched C₁-C₁₆-alkyl, linear or branched C₂-C₁₆-alkenyl, linear or branched C₂-C₁₆-alkinyl, C₃-C₁₀-cycloalkyl, C₆-C₁₀-aryl, heteroaryl or C₆-C₁₀-aryl-C₁-C₁₀-alkyl, benzyl.

The compounds of the formula (I) are known and can be prepared according to Griffin, C.E. et al., J. Org. Chem. 1969, 34, 1532 from commercially available compounds. NL 6610686 discloses further details regarding epoxyphosponates.

The reaction of the at least one alcohol and the phosphorus containing compound of the general formula (I) can take place in the presence of a catalyst.

Examples of suitable catalysts are coordinative catalysts such as DMC (double metal cyandide catalysts) or basic catalysts such as sodium hydroxide, potassium hydroxyide, caesium hydroxide, metal hydrides, such as sodium hydride, or non-nucleophilic amine bases, such as triethylamine or Hunig's base, bicyclic amines, such as DBU, imidazole, N-methylimidazole, or N-methylmorpholine, N-methylpiperidine, pyridine, or substituted pyridines, such as lutidine. Potassium hydroxide, imidazol and DMC are in particular preferred.

The alcohols used for the preparation of the phosphorus containing alcohols used according to the present invention can generally be any suitable alcohol having at least one reactive hydrogen atom, examples being those having functionality of from 1 to 8, preferably 1, 2, 3, 4, 5 or 6, and a molecular weight of from 100 to 6000. According to the present invention, polyols selected from the group of the polyether polyols, polyester polyols, and mixtures thereof are used.

Therefore, the phosphorus containing alcohol preferably has an OH-functionality of from 1 to 8. According to a further embodiment, the present invention therefore is directed to a process as disclosed above, wherein the phosphorus containing alcohol has an OH-functionality of from 1 to 8.

Furthermore, the phosphorus containing alcohol of the present invention preferably has a molecular weight of from 100 to 700 g/mol. According to a further embodiment, the present invention therefore is directed to a process as disclosed above, wherein the phosphorus containing alcohol has a molecular weight of from 100 to 6000 g/mol.

By way of example, polyetherols are produced from epoxides, such as propylene oxide and/or ethylene oxide, or from tetrahydrofuran, by using starter compounds containing active hydrogen, e.g. aliphatic alcohols, phenols, amines, carboxylic acids, water, or compounds based on natural materials, e.g. sucrose, sorbitol, or mannitol, with use of a catalyst. Preferably, polyetherols produced from propylene oxide and/or ethylene oxide are used as polyols.

The polyols preferably have an OH number in the range of 2 to 800 mg KOH/g.

According to a further embodiment, the process is carried out using ethylene oxide or propylene oxide or a mixture of ethylene oxide and propylene oxide as a further reactant. According to this embodiment, alkoxylation can take place simultaneously or before or after the reaction of the at least one alcohol with the phosphorus containing compound of the general formula (I). Suitable reaction conditions are generally known. Suitable conditions are for example disclosed in Chemistry and Technology of Polyols for polyurethanes, M. lonescu, 2005 Rapra Technology Limited, p. 321-336.

Random partial phosphorylation can be achieved by using less than the stoichiometric amount of the phosphorus component.

The phosphorus content of the phosphorus containing alcohol, comprising at least one phosphorus-containing group, is at least 3 % by weight, with particular preference in the range of from 4 to 30 % by weight, more preferably in the range of from 6 to 9 % by weight. According to the present invention the phosphorus containing alcohol has a phosphorus content of from 3 to 30 % by weight based on the total weight of the phosphorus containing alcohol.

Another precondition for the stated phosphorus content here, alongside the amount of compound of the formula (I), is the presence of sufficient OH groups in the phosphorus containing alcohol. These amounts can be adjusted via appropriate conduct of the reaction during production of the phosphorus containing alcohol. It is possible here that all, or a portion of, the OH groups within the polyol are reacted with the phosphorus component.

In general the reaction can be carried out without using solvents. Alternatively, the reaction for producing the phosphorus containing alcohol of the invention, comprising at least one phosphorus-containing group, can be carried out in the presence of a solvent. Suitable solvents for the phosphorylation reactions are inert organic solvents, such as DMSO, halogenated hydrocarbons, such as methylene chloride, chloroform, 1,2-dichloroethane, or chlorobenzene. Solvents which are further suitable are ethers, such as diethyl ether, methyl tert-butyl ether, dibutyl ether, dioxane, or tetrahydrofuran. Solvents which are further suitable are hydrocarbons, such as hexane, benzene, or toluene. Solvents which are further suitable are nitriles, such as acetonitrile or propionitrile. Solvents which are further suitable are ketones, such as acetone, butanone, or tert-butyl methyl ketone. It is also possible to use a mixture of the solvents, and it is also possible to operate without solvent.

The reaction is usually carried out at temperatures of from 0 °C up to the boiling point of the reaction mixture, preferably from 0 °C to 150 °C, particularly preferably at from room temperature to 120 °C.

Preferably, the reaction mixture can be used without further work-up.

The phosphorus containing alcohol, comprising at least one phosphorus-containing group, is used as flame retardant. The phosphorus containing alcohol can be used in crosslinking polymers, for example in polyurethane, e.g. polyurethane foams or thermoplastic polyurethanes.

The phosphorus containing alcohol further can be used in coatings, adhesives, sealants and elastomers.

The phosphorus containing alcohol, comprising at least one phosphorus-containing group, can be used in thermoplastics, including in thermoplastic polyurethane.

For the purposes of the invention, polyurethane comprises all of the known polyisocyanate polyaddition products. These comprise adducts of isocyanate and alcohol, and they also comprise modified polyurethanes which can comprise isocyanurate structures, allophanate structures, urea structures, carbodiimide structures, uretonimine structures, and biuret structures, and which can comprise further isocyanate adducts. These polyurethanes of the invention comprise in particular solid polyisocyanate polyaddition products, e.g. thermosets, and foams based on polyisocyanate polyaddition products, e.g. flexible foams, semirigid foams, rigid foams, or integral foams, and also polyurethane coatings and binders. For the purposes of the invention, the term polyurethanes also includes polymer blends comprising polyurethanes and further polymers, and also foams made of said polymer blends. It is preferable that the phosphorus containing alcohols of the invention, comprising at least one phosphorus-containing group, are used in producing polyurethane foams.

For the purposes of the invention, polyurethane foams are foams according to DIN 7726. The compressive stress value for flexible polyurethane foams of the invention at 10 % compression, or the compressive strength of these foams according to DIN 53 421/DIN EN ISO 604, is 15 kPa or less, preferably from 1 to 14 kPa, and in particular from 4 to 14 kPa. The compressive stress value for semirigid polyurethane foams of the invention at 10 % compression to DIN 53 421/DIN EN ISO 604 is from greater than 15 to less than 80 kPa. The open-cell factor to DIN ISO 4590 of semirigid polyurethane foams of the invention and of flexible polyurethane foams of the invention is preferably greater than 85 %, particularly preferably greater than 90 %. Further details concerning flexible polyurethane foams of the invention and semirigid polyurethane foams of the invention are found in "Kunststoffhandbuch, Band 7, Polyurethane" [Plastics handbook, volume 7, Polyurethanes], Carl Hanser Verlag, 3rd edition, 1993, chapter 5.

The compressive stress value for rigid polyurethane foams of the invention at 10 % compression is greater than or equal to 80 kPa, preferably greater than or equal to 120 kPa, particularly preferably greater than or equal to 150 kPa. The closed-cell factor to DIN ISO 4590 for the rigid polyurethane foam is moreover greater than 80 %, preferably greater than 90 %. Further details concerning rigid polyurethane foams of the invention are found in "Kunststoffhandbuch, Band 7, Polyurethane" [Plastics handbook, volume 7, Polyurethanes], Carl Hanser Verlag, 3rd edition, 1993, chapter 6.

For the purposes of this invention, elastomeric polyurethane foams are polyurethane foams according to DIN 7726, where these exhibit no residual deformation beyond 2 % of their initial thickness 10 minutes after brief deformation amounting to 50 % of their thickness to DIN 53 577. This foam can be a rigid polyurethane foam, a semirigid polyurethane foam, or a flexible polyurethane foam.

Integral polyurethane foams are polyurethane foams according to DIN 7726 having a marginal zone in which the density is higher than in the core, as a result of the shaping process. The overall density here averaged over the core and the marginal zone is preferably above 100 g/L. For the purposes of the invention, integral polyurethane foams can again be rigid polyurethane foams, semirigid polyurethane foams, or flexible polyurethane foams. Further details concerning the integral polyurethane foams of the invention are found in "Kunststoffhandbuch, Band 7, Polyurethane" [Plastics handbook, volume 7, Polyurethanes], Carl Hanser Verlag, 3rd edition, 1993, chapter 7.

Polyurethanes are obtained here by mixing isocyanates (a) with polyols (b), with a phosphorus containing alcohol according to the invention (c) and, if appropriate, with blowing agent (d), with catalyst (e), and with other auxiliaries and additives (f) to give a reaction mixture and permitting completion of the reaction.

Therefore, the present invention is directed to a process for the preparation of a polyurethane comprising the reaction of at least one isocyanate (a), at least one polyol (b) and at least one phosphorus containing alcohol as disclosed above or a phosphorus containing alcohol obtainable or obtained according to the process as disclosed above.

Polyisocyanate components (a) used for producing the polyurethanes of the invention comprise all of the polyisocyanates known for producing polyurethanes. These comprise the aliphatic, cycloaliphatic, and aromatic di- or polyfunctional isocyanates known from the prior art, and also any desired mixtures thereof. Examples are diphenylmethane 2,2"-, 2,4"-, and 4,4"-diisocyanate, the mixtures of monomeric diphenylmethane diisocyanates and of diphenylmethane diisocyanate homologues having a larger number of rings (polymer MDI), isophorone diisocyanate (IPDI) and its oligomers, tolylene 2,4- or 2,6-diisocyanate (TDI) and mixtures of these, tetramethylene diisocyanate and its oligomers, hexamethylene diisocyanate (HDI) and its oligomers, naphthylene diisocyanate (NDI), and mixtures thereof.

It is preferable to use tolylene 2,4- and/or 2,6-diisocyanate (TDI) or a mixture of these, monomeric diphenylmethane diisocyanates and/or diphenylmethane diisocyanate homologues having a larger number of rings (polymer MDI) and mixtures of these. Other possible isocyanates are given by way of example in "Kunststoffhandbuch, Band 7, Polyurethane" [Plastics handbook, volume 7, Polyurethanes], Carl Hanser Verlag, 3rd edition, 1993, chapters 3.2 and 3.3.2.

Polyisocyanate component (a) can be used in the form of polyisocyanate prepolymers. Said polyisocyanate prepolymers are obtainable by reacting an excess of polyisocyanates (constituent (a-1)) described above with polyols (constituent (a-2)), for example at temperatures of from 30 to 100 °C, preferably about 80 °C, to give the prepolymer.

Polyols (a-2) are known to the person skilled in the art and are described by way of example in "Kunststoffhandbuch, 7, Polyurethane" [Plastics handbook, volume 7, Polyurethanes], Carl Hanser Verlag, 3rd edition, 1993, chapter 3.1. By way of example, therefore, the polyols used can also comprise the polyols described below under (b). In one particular embodiment here, the polyisocyanate prepolymer can also comprise the phosphorus containing alcohol of the invention, comprising at least one phosphorus-containing group.

Polyols that can be used comprise all of the compounds (b) known for polyurethane production and having at least two reactive hydrogen atoms, examples being those having functionality of from 2 to 8 and molecular weight of from 400 to 15 000. It is therefore possible by way of example to use polyols selected from the group of the polyether polyols, polyester polyols, and mixtures thereof.

By way of example, polyetherols are produced from epoxides, such as propylene oxide and/or ethylene oxide, or from tetrahydrofuran, by using starter compounds containing active hydrogen, e.g. aliphatic alcohols, phenols, amines, carboxylic acids, water, or compounds based on natural materials, e.g. sucrose, sorbitol, or mannitol, with use of a catalyst. Mention may be made here of basic catalysts or double-metal-cyanide catalysts, as described by way of example in PCT/EP2005/010124, EP 0090444 or WO 05/090440.

By way of example, polyesterols are produced from aliphatic or aromatic dicarboxylic acids and from polyfunctional alcohols, from polythioether polyols, from polyesteramides, from polyacetals containing hydroxy groups, and/or from aliphatic phosphorus containing alcohols containing hydroxy groups, preferably in the presence of an esterification catalyst. Other possible polyols are given by way of example in "Kunststoffhandbuch, Band 7, Polyurethane" [Plastics handbook, volume 7, Polyurethanes], Carl Hanser Verlag, 3rd edition, 1993, chapter 3.1.

Polyols (b) also comprise chain extenders and crosslinking agents. The molar mass of chain extenders and crosslinking agents is less than 400 g/mol, and the term used here for molecules having two hydrogen atoms reactive toward isocyanate is chain extenders, while the term used for molecules having more than two hydrogens reactive toward isocyanate is crosslinking agents. Although it is possible here to omit the chain extender or crosslinking agent, addition of chain extenders or crosslinking agents or else, if appropriate, a mixture thereof has proven advantageous for modifying mechanical properties, e.g. hardness.

If chain extenders and/or crosslinking agents are used, it is possible to use the chain extenders and/or crosslinking agents that are known for the production of polyurethanes. These are preferably low-molecular-weight compounds having functional groups reactive toward isocyanates, examples being glycerol, trimethylol-propane, glycol, and diamines. Other possible low-molecular-weight chain extenders and/or crosslinking agents are given by way of example in "Kunststoffhandbuch, Band 7, Polyurethane" [Plastics handbook, volume 7, Polyurethanes], Carl Hanser Verlag, 3rd edition, 1993, chapters 3.2 and 3.3.2.

A phosphorus containing alcohol, comprising at least one phosphorus-containing group, is used as component (c). The proportion of phosphorus containing alcohol comprising at least one phosphorus-containing group (c), hereinafter also termed phosphorus containing alcohol (c), is subject to no restriction here and depends primarily on the degree of flame retardancy to be achieved.

Furthermore, according to the present invention, it is possible to adjust the phosphorus containing alcohol to the polyol (b) used for the preparation of the polyurethane, e.g. by choosing a suitable molecular weight. Therefore, it is for example possible to obtain improved mechanical properties of the polyurethane prepared. According to the present invention, it is also possible to use a mixture of two or more different phosphorus containing alcohols.

The proportion of phosphorus containing alcohol here can by way of example vary from 0.1 to 50 % by weight, preferably from 1 to 40 % by weight, and particularly preferably from 2 to 30 % by weight, based in each case on the total weight of components (a) to (e). The phosphorus content in the finished polyurethane here is preferably from 0.01 to 10 % by weight, particularly preferably from 0.05 to 5 % by weight, and in particular from 0.1 to 5 % by weight, based in each case on the total weight of the polyurethane.

The proportion of phosphorus containing alcohol used based on the total amount of polyol and alcohol used can be adjusted. By way of example, the proportion of phosphorus containing alcohol based on the total amount of polyol and alcohol is in the range of 1 to 30 %, preferably in the range of 5 to 20 % for the preparation of a flexible foam. By way of example, the proportion of phosphorus containing alcohol based on the total amount of polyol and alcohol is in the range of 2 to 50 %, preferably in the range of 10 to 40 % for the preparation of a rigid foam.

According to a further embodiment, the present invention is directed to a process for the preparation of a polyurethane as disclosed above, wherein the at least one phosphorus containing alcohol is used in an amount of 1 to 30 % of the total of all polyols and alcohols used or in an amount of 2 to 50 % of the total of all polyols and alcohols used.

The reaction mixtures of the invention preferably also comprise blowing agents (d) if the polyurethane is intended to take the form of polyurethane foam. It is possible here to use any of the blowing agents known for producing polyurethanes. These can comprise chemical and/or physical blowing agents. These blowing agents are described by way of example in "Kunststoffhandbuch, Band 7, Polyurethane" [Plastics handbook, volume 7, Polyurethanes], Carl Hanser Verlag, 3rd edition, 1993, chapter 3.4.5. The term chemical blowing agents is used here for compounds which form gaseous products via reaction with isocyanate. Examples of these blowing agents are water and carboxylic acids. The term physical blowing agents is used here for compounds which have been dissolved or emulsified in the starting materials for polyurethane production and which evaporate under the conditions of polyurethane formation. By way of example, these are hydrocarbons, halogenated hydrocarbons, and other compounds, e.g. perfluorinated alkanes, such as perfluorohexane, fluorochlorocarbons, and ethers, esters, ketones, acetals, and/or a liquid form of carbon dioxide. The amount used of the blowing agent here can be as desired. The amount used of the blowing agent is preferably such that the density of the resultant polyurethane foam is from 10 to 1000 g/L, particularly preferably from 20 to 800 g/L, and in particular from 25 to 200 g/L.

Catalysts (e) used can comprise any of the catalysts usually used for polyurethane production. These catalysts are described by way of example in "Kunststoffhandbuch, Band 7, Polyurethane" [Plastics handbook, volume 7, Polyurethanes], Carl Hanser Verlag, 3rd edition, 1993, chapter 3.4.1. Examples of those used here are organometallic compounds, preferably organ-otin compounds, e.g. stannous salts of organic carboxylic acids, for example stannous acetate, stannous octoate, stannous ethylhexanoate, and stannous laurate, and the dialkyltin(IV) salts of organic carboxylic acids, e.g. dibutyltin diacetate, dibutyltin dilaurate, dibutyltin maleate, and dioctyltin diacetate, and also bismuth carboxylates, such as bismuth(III) neodecanoate, bismuth 2-ethylhexanoate, and bismuth octanoate, or a mixture. Other possible catalysts are basic amine catalysts. Examples of these are amidines, such as 2,3-dimethyl-3,4,5,6-tetrahydropyrimidine, tertiary amines, such as triethylamine, tributylamine, dimethylbenzylamine, N-methyl- and N-ethyl-N-cyclohexylmorpholine, N,N,N',N'-tetramethylethylenediamine, N,N,N',N'-tetramethylbutanediamine, N,N,N',N'-tetramethylhexanediamine, pentamethyldiethy-lenetriamine, tetramethyldiaminoethyl ether, bis(dimethylaminopropyl)urea, dimethylpiperazine, 1,2-dimethylimidazole, 1-aza-bicyclo[3.3.0]octane, and preferably 1,4-diazabicyclo[2.2.2]octane, and alkanolamine compounds, such as triethanolamine, triisopropanolamine, N-methyl- and N-ethyl-diethanolamine, and dimethylethanolamine. The catalysts can be used individually or in the form of mixtures. If appropriate, the catalysts (e) used comprise mixtures of metal catalysts and of basic amine catalysts.

Particularly if a relatively large excess of polyisocyanate is used, other catalysts that can be used are: tris(dialkylaminoalkyl)-s-hexahydrotriazines, preferably tris(N,N-dimethylaminopropyl)-s-hexahydrotriazine, tetraalkylammonium hydroxides, such as tetramethylammonium hydroxide, alkali metal hydroxides, such as sodium hydroxide, and alkali metal alcoholates, such as sodium methoxide and potassium isopropoxide, and also the alkali metal or ammonium salts of carboxylic acids, e.g. potassium formate or ammonium formate, or the corresponding acetates or octoates.

Examples of the concentration of the catalysts (e) that can be used are from 0.001 to 5 % by weight, in particular from 0.05 to 2 % by weight in the form of catalyst or catalyst combination, based on the weight of component (b).

It is also possible to use auxiliaries and/or additives (f). It is possible here to use any of the auxiliaries and additives known for producing polyurethanes. By way of example, mention may be made of surface-active substances, foam stabilizers, cell regulators, release agents, fillers, dyes, pigments, flame retardants, hydrolysis stabilizers, and fungistatic and bacteriostatic substances. These substances are described by way of example in "Kunststoffhandbuch, Band 7, Polyurethane" [Plastics handbook, volume 7, Polyurethanes], Carl Hanser Verlag, 3rd edition, 1993, chapter 3.4.4 and 3.4.6 to 3.4.11.

When producing the polyurethane of the invention, the amounts reacted of the polyisocyanates (a), the polyols (b), the phosphorus containing alcohols (c) and, if appropriate, the blowing agents (d) are generally such that the equivalence ratio of NCO groups of the polyisocyanates (a) to the total number of reactive hydrogen atoms in components (b), (c), and, if appropriate, (d) is from 0.75 to 1.5:1, preferably from 0.80 to 1.25:1. If the cellular plastics comprise at least some isocyanurate groups, the ratio used of NCO groups of the polyisocyanates (a) to the total number of reactive hydrogen atoms in component (b), (c) and, if appropriate, (d) and (f) is usually from 1.5 to 20:1, preferably from 1.5 to 8:1. A ratio of 1:1 here corresponds to an isocyanate index of 100.

There is respectively very little quantitative and qualitative difference between the specific starting materials (a) to (f) used for producing polyurethanes of the invention when the polyurethane to be produced of the invention is a thermoplastic polyurethane, a flexible foam, a semirigid foam, a rigid foam, or an integral foam. By way of example, therefore, the production of solid polyurethanes uses no blowing agents, and for thermoplastic polyurethane the starting materials used are predominantly strictly difunctional. It is also possible by way of example to use the functionality and the chain length of the relatively high-molecular-weight compound having at least two reactive hydrogen atoms to vary the elasticity and hardness of the polyurethane of the invention. This type of modification is known to the person skilled in the art.

By way of example, the starting materials for producing a solid polyurethane are described in EP 0989146 or EP 1460094, the starting materials for producing a flexible foam are described in PCT/EP2005/010124 and EP 1529792, the starting materials for producing a semirigid foam are described in "Kunststoffhandbuch, Band 7, Polyurethane" [Plastics handbook, volume 7, Polyurethanes], Carl Hanser Verlag, 3rd edition, 1993, chapter 5.4, the starting materials for producing a rigid foam are described in PCT/EP2005/010955, and the starting materials for producing an integral foam are described in EP 364854, U.S. Pat. No. 5,506,275, or EP 0897402. In each case, the phosphorus containing alcohol (c) is then also added to the starting materials described in said documents.

In another embodiment of the present invention, the phosphorus containing alcohol (c) has OH groups. Here, the phosphorus containing alcohol (c) is preferably adapted in relation to functionality and OH number in such a way that there is only slight impairment of the mechanical properties of the resultant polymer, or preferably indeed an improvement therein. At the same time, change to the processing profile is minimized. This type of adaptation can by way of example be achieved in that the OH number and functionality of the compound (c) are within the region of the OH number and functionality of the polyol used for polyurethane production.

If the phosphorus containing alcohol (c) has OH groups, the production of flexible polyurethane foams preferably uses, as phosphorus containing alcohol (c), a compound which has an OH number of from 2 to 100 mg KOH/g, particularly preferably from 10 to 80 mg KOH/g, and in particular from 20 to 50 mg KOH/g, with an OH functionality which is preferably from 2 to 4, particularly preferably from 2.1 to 3.8, and in particular from 2.5 to 3.5.

If the phosphorus containing alcohol (c) has OH groups, the production of rigid polyurethane foams preferably uses, as phosphorus containing alcohol (c), a compound which has an OH number which is preferably from 2 to 800 mg KOH/g, particularly preferably from 50 to 600 mg KOH/g, and in particular from 100 to 400 mg KOH/g, with an OH functionality which is preferably from 2 to 8, particularly preferably from 2 to 6.

If the phosphorus containing alcohol (c) has OH groups, the production of thermoplastic polyurethane (TPU) preferably uses, as phosphorus containing alcohol (c), a compound which has an OH number of from 2 to 800 mg KOH/g, particularly preferably from 10 to 600 mg KOH/g, and in particular from 20 to 400 mg KOH/g, with an OH functionality which is preferably from 1.8 to 2.2, particularly preferably from 2.9 to 2.1, and in particular 2.0.

If a polyisocyanurate foam is produced, using a ratio of NCO groups of the polyisocyanates (a) to the total number of reactive hydrogen atoms in component (b), (c), and, if appropriate, (d) and (f) which is from 1.5 to 20:1, the OH functionality of component (c) is preferably from 2 to 3, with an OH number which is preferably from 20 to 800 mg KOH/g, particularly preferably from 50 to 600 mg KOH/g, and in particular from 100 to 400 mg KOH/g.

However, it is also possible in all cases to use any of the phosphorus containing alcohols (c).

It is preferable here that the phosphorus containing alcohol comprising at least one phosphorus-containing group (c) is soluble in the polyols (b). "Soluble" here means that after 24 h of standing at 50 °C no second phase that is visible to the naked eye has formed in a mixture of polyol component (b) and component (c) in the ratio corresponding to the amount subsequently used for producing the polyurethane. Solubility here can by way of example be improved via functionalization of component (c) or, respectively, the phosphorus containing alcohol of the invention, for example by using alkylene oxide.

The present invention is also directed to the use of a phosphorus containing alcohol as disclosed above or a phosphorus containing alcohol obtainable or obtained according to the process as disclosed above as a flame retardant. Furthermore, the present invention is directed to the use of a phosphorus containing alcohol as disclosed above or a phosphorus containing alcohol obtainable or obtained according to the process as disclosed above for the preparation of a polyurethane with improved flammability properties.

The present invention is also directed to a polyurethane obtainable or obtained by a process for the preparation of a polyurethane as disclosed above. According to a further embodiment, the present invention is directed to a polyurethane as disclosed above, wherein the polyurethane is a polyurethane foam.

Examples will be used below to illustrate the invention.

### EXAMPLES

### 1. Synthesis of the epoxyphosphonate

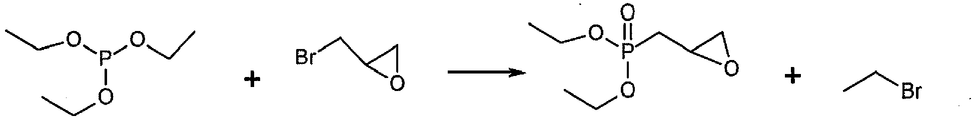

In a 2-L- glas apparatus with dropping funnel and destillation unit 415.4 g; 2.5 mol triethylphosphite is added at 92 °C. Epibromhydrin (342.5 g, 2.5 mol) is dropped during 11 h. 10 h after start of dropping the destillate is obtained (Ethylbromid, 37-38 °C). The mixture is stirred for further 20 h at 95 °C until nor more ethylbromid is distilled. Afterwards the mixture is cooled down to 75 °C and vacuum is applied to remove impurities. The obtained product is colourless, low-viscous oil with 471 g (98 % of theory). The chemical shift at 26.2 ppm is measured by ³¹P-NMR (CDCl₃). Without any further purification the product was transferred to the further synthesis.

### 2. Synthesis of the epoxyphosphonate-polyols

### 2.1 Synthesis of the modified polyol 1

To 150.5 g of a polyetherol, synthesised by glycerine, propylenoxide and an anionic catalyst with the OH number 420 mg KOH / g polyol, 0.1 g imidazole at 25 °C are added. The reaction mixture is headed up in a glass apparatus under nitrogen up to 60 °C. Afterwards 96.5 g 2-Diethoxyphosphorlyoxirane is added dropwise at the same temperature. Then, the temperature is increased to 120 °C and stirred for 2 h before cooling down to room temperature. 215.4 g product is obtained.

### Characteristics of the product:

OH number: 442.5 mg KOH/g

### 2.2 Synthesis of the modified polyol 2

To 197.0 g of a polyetherol, synthesised by glycerine, propyleneoxide and an anionic catalyst with the OH number 420 mg KOH / g polyol, 0.2 g imidazole at 25 °C are added.

The reaction mixture is headed up in a glass apparatus under nitrogen up to 60 °C. Afterwards 252.8 g 2-Diethoxyphosphorlyoxirane are added dropwise at the same temperature. Then, the temperature is increased to 120 °C and stirred for 2 h before cooling down to room temperature. 428.2 g product is obtained.

### Characteristics of the product:

OH number: 202.5 mg KOH/g
Viscosity, DIN 53018 (25 °C): 49 mPas

### 3. Formulation of the flame retarded PU flexible foam

**Table 1**

| | | **Sample** | **Reference** | **Reference without FR** |
|---|---|---|---|---|
| ***A-Component*** | | | | |
| Polyoxypropylene-polyoxyethylen-polyol; OH-number: 35; functionality: 2.7 | w/w | 66.70 | 66.70 | 66.70 |
| Graftpolyol based on styrene-acrylnitrile; solid content: 45 %; polyoxypropylene-oxyethylene-polyol; OH-number: 20; functionality: 2.7 | w/w | 33.30 | 33.30 | 33.30 |
| Diethanolamine 80 % in water | w/w | 1.49 | 1.49 | 1.49 |
| Ortegol 204, Evonik | w/w | 1.50 | 1.50 | 1.50 |
| Tegostab B 8681, Evonik | w/w | 0.50 | 0.50 | 0.5 |
| Tin-octoate and amine catalyst | w/w | 0.35 | 0.50 | 0.40 |
| Water | w/w | 2.20 | 2.00 | 1.95 |
| Lupragen TCPP, BASF SE | w/w | | 9.40 | |
| **Modified Polyol 1** | w/w | 13.33 | | |
| | | | | |

| ***B-Component:*** | | | | |
|---|---|---|---|---|
| Lupranat T80 | w/w | 100 | 100 | 100 |
| | | | | |
| Index | | 107 | 107 | 107 |
| MV (100 : X) (A: B) | | 38.8 | 33.7 | 36.2 |

| **Mechanics** | | | | |
|---|---|---|---|---|
| Density | kg/m³ | 31.7 | 35.1 | |
| Compression Strength 40 % | kPa | 4.1 | 3.4 | |
| Ball Rebound Test | % | 45 | 55 | |
| Air permeability | dm³/s | 0.911 | 0.758 | |

| **California TB 117 A** | | | | |
|---|---|---|---|---|
| Average burned length | mm | 65 | 48 | 233 |
| Maximum burned length | mm | 68 | 60 | 250 |
| Result | | Passed | Passed | Not passed |

According to the table 1 above all components without metal catalysts and isocyanate are mixed. Subsequently, metal catalysts and isocyanate are added and stirred again. The mixing is stopped when the reaction starts and poured into a foaming box. The total mass was 1800 g. After curing the foam is cut into the respective specimen.

### 4. Formulation of PU and PIR Rigid Foams

**A-Component**

| | | | | **PIR rigid foam** | | | | **PU rigid foam** | | | |
|---|---|---|---|---|---|---|---|---|---|---|---|
| | **OHZ** | **NCO** | **H2O** | **1** | **2** | **3** | **4** | **5** | **6** | **7** | **8** |
| Lupraphen VP 9328, BASF SE | 210 | | 0.08 | 66.666 | 50.000 | 50.000 | 50.000 | | | | |
| Lupraphen VP 9330, BASF SE | 220 | | 0.08 | 20.000 | 15.000 | 15.000 | 15.000 | | | | |
| Pluriol E 600, BASF SE | 188 | | 0.30 | 10.666 | 8.000 | 8.000 | 8.000 | 7.500 | 6.000 | 6.000 | 6.000 |
| Tegostab B8467, Evonik | 110 | | 0.20 | 2.666 | 2.000 | 2.000 | 2.000 | | | | |
| Lupragen TCPP,. BASF SE | | | 0.07 | 0.000 | 25.000 | 12.500 | | 0.000 | 20.000 | 10.000 | |
| **Modified Polyol 2** | | | | | | 12.500 | 25.000 | | | 10.000 | 20.000 |
| Lupraphen VP 9389, BASF SE | 245 | | 0.10 | | | | | 58.125 | 46.500 | 46.500 | 46.500 |
| Lupranol 3422, BASF SE | 490 | | 0.10 | | | | | 31.250 | 25.000 | 25.000 | 25.000 |
| Niax Silicone L-6635, Momentive | 20 | | 0.06 | | | | | 3.125 | 2.500 | 2.500 | 2.500 |
| | | | **Sum:** | **100.00** | **100.00** | **100.00** | **100.00** | **100.00** | **100.00** | **100.00** | **100.00** |

**Auxiliary**

| | **OHZ** | **NCO** | **H2O** | **1** | **2** | **3** | **4** | **5** | **6** | **7** | **8** |
|---|---|---|---|---|---|---|---|---|---|---|---|
| Catalyst KX 340, BASF SE | 1.153 | | | 1.800 | 1.800 | 1.800 | 1.800 | | | | |
| Lupragen® N205, BASF SE (Bis-(2-dimethyl-aminoethylether) | 251 | | 0.25 | 1.500 | 1.500 | 1.200 | 1.000 | 0.350 | 0.250 | 0.200 | 0.150 |
| Amasil 85 %, BASF SE | 2.074 | | 15.00 | 2.200 | 2.200 | 2.100 | 2.100 | | | | |
| Pentan S 80/20, Sigma-Aldrich | | | | 9.000 | 9.000 | 9.000 | 9.000 | 7.000 | 7.000 | 7.000 | 7.000 |
| Catalyst KX 324, BASF SE | 970 | | 3.00 | | | | | 1.500 | 1.500 | 1.500 | 1.500 |
| Tetramethyl-hexandiamine | | | 0.30 | | | | | 0.500 | 0.250 | 0.200 | 0.150 |
| Additiv99, BASF SE | 425 | | 60.00 | | | | | 3.400 | 2.500 | 2.450 | 2.400 |
| | | | **Sum:** | **14.50** | **14.50** | **14.10** | **13.90** | **12.75** | **11.50** | **11.35** | **11.20** |

**B-Component**

| | **OHZ** | **NCO** | **H2O** | **1** | **2** | **3** | **4** | **5** | **6** | **7** | **8** |
|---|---|---|---|---|---|---|---|---|---|---|---|
| Lupranat M 50. BASF SE | | 31.50 | | 100.00 | 100.00 | 100.00 | 100.00 | 100.00 | 100.00 | 100.00 | 100.00 |
| | | | **Sum:** | **100.00** | **100.00** | **100.00** | **100.00** | **100.00** | **100.00** | **100.00** | **100.00** |

| Test | | | | 1 | 2 | 3 | 4 | 5 | 6 | 7 | 8 |
|---|---|---|---|---|---|---|---|---|---|---|---|
| Beaker test | | Gel time | s | 44 | 44 | 44 | 44 | 44 | 44 | 45 | 44 |
| | | Raw Density | g/L | 45.3 | 44.8 | 44.1 | 44.1 | 45.4 | 44.7 | 44.9 | 44.1 |
| | | Needle Height | cm | 3.6 | 3.1 | 3.4 | 3.7 | 3.7 | 3.5 | 4.4 | 5.1 |
| | | | | | | | | | | | |
| Mechanics | | | | | | | | | | | |
| | | KRD | g/L | 43.0 | 43.2 | 43.0 | 40.4 | 43.2 | 41.7 | 41.9 | 42.9 |
| | | Compression strength orthogonal | N/mm² | 0.37 | 0.34 | 0.34 | 0.30 | 0.44 | 0.38 | 0.38 | 0.34 |
| | | Compression strength parallel | N/mm² | 0.17 | 0.18 | 0.16 | 0.13 | 0.14 | 0.12 | 0.12 | 0.13 |
| | | | | | | | | | | | |
| B2-Test | | Totally Burned | | yes | no | no | no | yes | no | no | >18cm |
| | | Flame Height | cm | | 8 | 9 | 12 | | 13 | 15 | 18 |
| | | Flame Height | cm | | 7 | 9 | 12 | | 9 | 15 | 18 |
| | | Flame Height | cm | | 10 | 8 | 12 | | 12 | 15 | 18 |
| | | | Sum: | 0 | 25 | 26 | 36 | 0 | 34 | 45 | 54 |
| | | | Mean value: | 0 | 8.3 | 8.7 | 12 | 0 | 11.3 | 15 | 18 |

### Experiment description

Weighted Sample: open foam cube: 750g (1-4) and 700g (5-8)
Relative humidity: 39 %

### 5. Testing methods

### 5.1 California TB 117A

The California TB 117 A is a vertical small scale burner test for flexible PU foam. The specimen geometries are 30.5 x 7.5 x 1.3 cm. The foam is ignited by a 3.8 cm flame for 12 s.

The test is passed if:
(a) Maximum average burned length of all specimen is smaller than 15 cm
(b) Maximum burned length of each respective specimen is smaller than 20 cm
(c) The average after burning time is not higher than 5 s.
(d) The individual after burning time of each specimen is not higher than 10 s.
(e) The average after glowing time is not higher than 15 s.
(f) The test is performed before and after conditioning for 24 h at 104 °C.

The test is passed if for all specimen, the specifications are fulfilled or if 1 specimen does not pass and further 5 specimen pass.

### 5.2 DIN 4102 B2, B 2-Test for PU rigid foams.

The burner test according to DIN 4102-1 "Norm zur Bestimmung der Brennbarkeit von Baustoffen. Aufbau und Bedingungen". The orthogonal fixed sample is flamed with a propane burner (45 °C angular to the sample) at the lower edge for 15 s.

The test is passed with B2 if the flame height is smaller than 15 s and the burning time is not higher than 20 s.

### 5.3 Further Methods

The measurement of the compression strength with 10 % strain was done with a Universalprüfmaschine by Zwick, Germany in respect to ISO 844 EN.

## Claims

1. A process for the preparation of a polyurethane comprising the reaction of at least one isocyanate (a), at least one polyol (b) and at least one phosphorus containing alcohol comprising at least one phosphorus-containing group, obtainable or obtained by a process comprising the reaction of at least one alcohol with a phosphorus containing compound of the general formula (I): 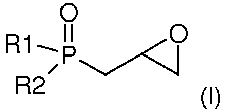 wherein
R1, R2 are equal or different linear or branched C₁-C₁₈-alkyl, linear or branched C₂-C₁₈-alkenyl, linear or branched C₂-C₁₈-alkinyl, C₃-C₁₀-cycloalkyl, C₆-C₁₀-aryl, heteroaryl, C₆-C₁₀-aryl-C₁-C₁₀-alkyl, benzyl, OR³, SR³, or R¹ and R² in combination with the P atom which they are bound to form a 4 to 8-membered ring system;
R³ is hydrogen, linear or branched C₁-C₁₆-alkyl, linear or branched C₂-C₁₆-alkenyl, linear or branched C₂-C₁₆-alkinyl, C₃-C₁₀-cycloalkyl, C₆-C₁₀-aryl, heteroaryl or C₆-C₁₀-aryl-C₁-C₁₀-alkyl, benzyl, and
wherein the at least one phosphorus-containing group is a group of the general formula (II): 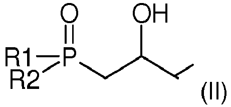 wherein
R1, R2 are equal or different linear or branched C₁-C₁₈-alkyl, linear or branched C₂-C₁₈-alkenyl, linear or branched C₂-C₁₈-alkinyl, C₃-C₁₀-cycloalkyl, C₆-C₁₀-aryl, heteroaryl, C₆-C₁₀-aryl-C₁-C₁₀-alkyl, benzyl, OR³, SR³, or R¹ and R² in combination with the P atom which they are bound to form a 4 to 8-membered ring system;
R³ is hydrogen, linear or branched C₁-C₁₆-alkyl, linear or branched C₂-C₁₆-alkenyl, linear or branched C₂-C₁₆-alkinyl, C₃-C₁₀-cycloalkyl, C₆-C₁₀-aryl, heteroaryl or C₆-C₁₀-aryl-C₁-C₁₀-alkyl, benzyl,
wherein the at least one alcohol is a polyol and
wherein the phosphorus containing alcohol has a phosphorus content of from 3 to 30 % by weight based on the total weight of the phosphorus containing alcohol,
wherein the polyol is selected from the group of the polyether polyols, polyester polyols, and mixtures thereof.

2. The process according to claim 1, wherein the polyurethane comprises modified polyurethanes comprising isocyanurate structures, allophanate structures, urea structures, carbodiimide structures, uretonimine structures, and biuret structures, or further isocyanate adducts.

3. The process according to claim 1 or 2, wherein the phosphorus is present in the form of phosphate, phosphonate or phosphinate groups or metal salts thereof.

4. The process according to any of claims 1 to 3, wherein the phosphorus containing alcohol has an OH-functionality of from 1 to 8.

5. The process according to any of claims 1 to 4, wherein the phosphorus containing alcohol has a molecular weight of from 100 to 6000 g/mol.

6. The process according to any of claims 1 to 5, wherein the phosphorus containing alcohol has an OH number in the range of 2 to 800.

7. The process according to any of claims 1 to 6, wherein the reaction of the at least one alcohol with the phosphorus containing compound of the general formula (I) takes place in the presence of a catalyst.

8. The process according to any of claims 1 to 7, wherein the at least one phosphorus containing alcohol is used in an amount of 1 to 30 % of the total of all polyols and alcohols used.

9. Polyurethane obtainable or obtained by a process according to any of claims 1 to 8.

10. The polyurethane according to claim 9, wherein the polyurethane is a polyurethane foam, a thermoplastic polyurethane, a coating, an adhesive, a sealant, or an elastomer.

11. Use of a phosphorus containing alcohol comprising at least one phosphorus-containing group, obtainable or obtained by a process comprising the reaction of at least one alcohol with a phosphorus containing compound of the general formula (I): 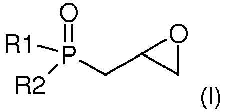 wherein
R1, R2 are equal or different linear or branched C₁-C₁₈-alkyl, linear or branched C₂-C₁₈-alkenyl, linear or branched C₂-C₁₈-alkinyl, C₃-C₁₀-cycloalkyl, C₆-C₁₀-aryl, heteroaryl, C₆-C₁₀-aryl-C₁-C₁₀-alkyl, benzyl, OR³, SR³, or R¹ and R² in combination with the P atom which they are bound to form a 4 to 8-membered ring system;
R³ is hydrogen, linear or branched C₁-C₁₆-alkyl, linear or branched C₂-C₁₆-alkenyl, linear or branched C₂-C₁₆-alkinyl, C₃-C₁₀-cycloalkyl, C₆-C₁₀-aryl, heteroaryl or C₆-C₁₀-aryl-C₁-C₁₀-alkyl, benzyl, and
wherein the at least one phosphorus-containing group is a group of the general formula (II): 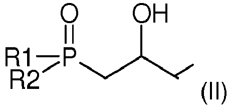 wherein
R1, R2 are equal or different linear or branched C₁-C₁₈-alkyl, linear or branched C₂-C₁₈-alkenyl, linear or branched C₂-C₁₈-alkinyl, C₃-C₁₀-cycloalkyl, C₆-C₁₀-aryl, heteroaryl, C₆-C₁₀-aryl-C₁-C₁₀-alkyl, benzyl, OR³, SR³, or R¹ and R² in combination with the P atom which they are bound to form a 4 to 8-membered ring system;
R³ is hydrogen, linear or branched C₁-C₁₆-alkyl, linear or branched C₂-C₁₆-alkenyl, linear or branched C₂-C₁₆-alkinyl, C₃-C₁₀-cycloalkyl, C₆-C₁₀-aryl, heteroaryl or C₆-C₁₀-aryl-C₁-C₁₀-alkyl, benzyl,
wherein the at least one alcohol is a polyol and
wherein the phosphorus containing alcohol has a phosphorus content of from 3 to 30 % by weight based on the total weight of the phosphorus containing alcohol, and
wherein the polyol is selected from the group of the polyether polyols, polyester polyols, and mixtures thereof
as a flame retardant.

12. Use of a phosphorus containing alcohol comprising at least one phosphorus-containing group, obtainable or obtained by a process comprising the reaction of at least one alcohol with a phosphorus containing compound of the general formula (I): 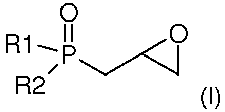 wherein
R1, R2 are equal or different linear or branched C₁-C₁₈-alkyl, linear or branched C₂-C₁₈-alkenyl, linear or branched C₂-C₁₈-alkinyl, C₃-C₁₀-cycloalkyl, C₆-C₁₀-aryl, heteroaryl, C₆-C₁₀-aryl-C₁-C₁₀-alkyl, benzyl, OR³, SR³, or R¹ and R² in combination with the P atom which they are bound to form a 4 to 8-membered ring system;
R³ is hydrogen, linear or branched C₁-C₁₆-alkyl, linear or branched C₂-C₁₆-alkenyl, linear or branched C₂-C₁₆-alkinyl, C₃-C₁₀-cycloalkyl, C₆-C₁₀-aryl, heteroaryl or C₆-C₁₀-aryl-C₁-C₁₀-alkyl, benzyl, and
wherein the at least one phosphorus-containing group is a group of the general formula (II): 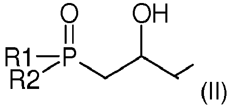 wherein
R1, R2 are equal or different linear or branched C₁-C₁₈-alkyl, linear or branched C₂-C₁₈-alkenyl, linear or branched C₂-C₁₈-alkinyl, C₃-C₁₀-cycloalkyl, C₆-C₁₀-aryl, heteroaryl, C₆-C₁₀-aryl-C₁-C₁₀-alkyl, benzyl, OR³, SR³, or R¹ and R² in combination with the P atom which they are bound to form a 4 to 8-membered ring system;
R³ is hydrogen, linear or branched C₁-C₁₆-alkyl, linear or branched C₂-C₁₆-alkenyl, linear or branched C₂-C₁₆-alkinyl, C₃-C₁₀-cycloalkyl, C₆-C₁₀-aryl, heteroaryl or C₆-C₁₀-aryl-C₁-C₁₀-alkyl, benzyl,
wherein the at least one alcohol is a polyol and
wherein the phosphorus containing alcohol has a phosphorus content of from 3 to 30 % by weight based on the total weight of the phosphorus containing alcohol, and
wherein the polyol is selected from the group of the polyether polyols, polyester polyols, and mixtures thereof
for the preparation of a polyurethane with improved flammability properties.

## Patentansprüche

1. Verfahren zur Herstellung eines Polyurethans, bei dem man mindestens ein Isocyanat (a), mindestens ein Polyol (b) und mindestens einen durch ein Verfahren, bei dem man mindestens einen Alkohol mit einer phosphorhaltigen Verbindung der allgemeinen Formel (I): 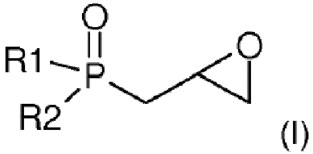 umsetzt, erhältlichen oder erhaltenen phosphorhaltigen Alkohol, der mindestens eine phosphorhaltige Gruppe umfasst, umsetzt;
wobei
R1 und R2 für gleiches oder verschiedenes lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl, C₆-C₁₀-Aryl, Heteroaryl, C₆-C₁₀-Aryl-C₁-C₁₀-alkyl, Benzyl, OR³ oder SR³ stehen oder R¹ und R² in Kombination mit dem P-Atom, an das sie gebunden sind, ein 4- bis 8-gliedriges Ringsystem bilden;
R³ für Wasserstoff, lineares oder verzweigtes C₁-C₁₆-Alkyl, lineares oder verzweigtes C₂-C₁₆-Alkenyl, lineares oder verzweigtes C₂-C₁₆-Alkinyl, C₃-C₁₀-Cycloalkyl, C₆-C₁₀-Aryl, Heteroaryl, C₆-C₁₀-Aryl-C₁-C₁₀-alkyl oder Benzyl steht, und
wobei es sich bei der mindestens einen phosphorhaltigen Gruppe um eine Gruppe der allgemeinen Formel (II) handelt: 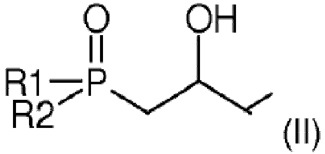 wobei
R1 und R2 für gleiches oder verschiedenes lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl, C₆-C₁₀-Aryl, Heteroaryl, C₆-C₁₀-Aryl-C₁-C₁₀-alkyl, Benzyl, OR³ oder SR³ stehen oder R¹ und R² in Kombination mit dem P-Atom, an das sie gebunden sind, ein 4- bis 8-gliedriges Ringsystem bilden;
R³ für Wasserstoff, lineares oder verzweigtes C₁-C₁₆-Alkyl, lineares oder verzweigtes C₂-C₁₆-Alkenyl, lineares oder verzweigtes C₂-C₁₆-Alkinyl, C₃-C₁₀-Cycloalkyl, C₆-C₁₀-Aryl, Heteroaryl, C₆-C₁₀-Aryl-C₁-C₁₀-alkyl oder Benzyl steht,
wobei es sich bei dem mindestens einen Alkohol um ein Polyol handelt und
wobei der phosphorhaltige Alkohol einen Phosphorgehalt von 3 bis 30 Gew.-%, bezogen auf das Gesamtgewicht des phosphorhaltigen Alkohols, aufweist und
wobei das Polyol aus der Gruppe der Polyetherpolyole, Polyesterpolyole und Mischungen davon ausgewählt wird.

2. Verfahren nach Anspruch 1, wobei das Polyurethan modifizierte Polyurethane, die Isocyanurat-Strukturen, Allophanat-Strukturen, Harnstoff-Strukturen, Carbodiimid-Strukturen, Uretonimin-Strukturen und Biuret-Strukturen oder weitere Isocyanat-Addukte umfassen, umfasst.

3. Verfahren nach Anspruch 1 oder 2, wobei der Phosphor in Form von Phosphat-, Phosphonat- oder Phosphinatgruppen oder Metallsalzen davon vorliegt.

4. Verfahren nach einem der Ansprüche 1 bis 3, wobei der phosphorhaltige Alkohol eine OH-Funktionalität von 1 bis 8 aufweist.

5. Verfahren nach einem der Ansprüche 1 bis 4, wobei der phosphorhaltige Alkohol ein Molekulargewicht von 100 bis 6000 g/mol aufweist.

6. Verfahren nach einem der Ansprüche 1 bis 5, wobei der phosphorhaltige Alkohol eine OH-Zahl im Bereich von 2 bis 800 aufweist.

7. Verfahren nach einem der Ansprüche 1 bis 6, bei dem die Umsetzung des mindestens einen Alkohols mit der phosphorhaltigen Verbindung der allgemeinen Formel (I) in Gegenwart eines Katalysators erfolgt.

8. Verfahren nach einem der Ansprüche 1 bis 7, wobei der mindestens eine phosphorhaltige Alkohol in einer Menge von 1 bis 30 % der Summe aller verwendeten Polyole und Alkohole verwendet wird.

9. Polyurethan, erhältlich oder erhalten durch ein Verfahren nach einem der Ansprüche 1 bis 8.

10. Polyurethane nach Anspruch 9, wobei es sich bei dem Polyurethane um einen Polyurethanschaumstoff, ein thermoplastisches Polyurethan, eine Beschichtung, einen Klebstoff, einen Dichtstoff oder ein Elastomer handelt.

11. Verwendung eines durch ein Verfahren, bei dem man mindestens einen Alkohol mit einer phosphorhaltigen Verbindung der allgemeinen Formel (I): 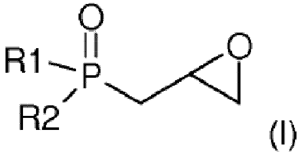 umsetzt, erhältlichen oder erhaltenen phosphorhaltigen Alkohols, der mindestens eine phosphorhaltige Gruppe umfasst;
wobei
R1 und R2 für gleiches oder verschiedenes lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl, C₆-C₁₀-Aryl, Heteroaryl, C₆-C₁₀-Aryl-C₁-C₁₀-alkyl, Benzyl, OR³ oder SR³ stehen oder R¹ und R² in Kombination mit dem P-Atom, an das sie gebunden sind, ein 4- bis 8-gliedriges Ringsystem bilden;
R³ für Wasserstoff, lineares oder verzweigtes C₁-C₁₆-Alkyl, lineares oder verzweigtes C₂-C₁₆-Alkenyl, lineares oder verzweigtes C₂-C₁₆-Alkinyl, C₃-C₁₀-Cycloalkyl, C₆-C₁₀-Aryl, Heteroaryl, C₆-C₁₀-Aryl-C₁-C₁₀-alkyl oder Benzyl steht, und
wobei es sich bei der mindestens einen phosphorhaltigen Gruppe um eine Gruppe der allgemeinen Formel (II) handelt: 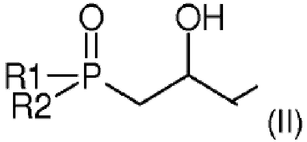 wobei
R1 und R2 für gleiches oder verschiedenes lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl, C₆-C₁₀-Aryl, Heteroaryl, C₆-C₁₀-Aryl-C₁-C₁₀-alkyl, Benzyl, OR³ oder SR³ stehen oder R¹ und R² in Kombination mit dem P-Atom, an das sie gebunden sind, ein 4- bis 8-gliedriges Ringsystem bilden;
R³ für Wasserstoff, lineares oder verzweigtes C₁-C₁₆-Alkyl, lineares oder verzweigtes C₂-C₁₆-Alkenyl, lineares oder verzweigtes C₂-C₁₆-Alkinyl, C₃-C₁₀-Cycloalkyl, C₆-C₁₀-Aryl, Heteroaryl, C₆-C₁₀-Aryl-C₁-C₁₀-alkyl oder Benzyl steht,
wobei es sich bei dem mindestens einen Alkohol um ein Polyol handelt und
wobei der phosphorhaltige Alkohol einen Phosphorgehalt von 3 bis 30 Gew.-%, bezogen auf das Gesamtgewicht des phosphorhaltigen Alkohols, aufweist und
wobei das Polyol aus der Gruppe der Polyetherpolyole, Polyesterpolyole und Mischungen davon ausgewählt wird,
als Flammschutzmittel.

12. Verwendung eines durch ein Verfahren, bei dem man mindestens einen Alkohol mit einer phosphorhaltigen Verbindung der allgemeinen Formel (I): 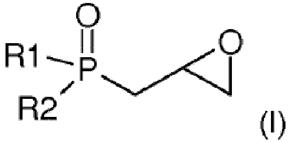 umsetzt, erhältlichen oder erhaltenen phosphorhaltigen Alkohols, der mindestens eine phosphorhaltige Gruppe umfasst;
wobei
R1 und R2 für gleiches oder verschiedenes lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl, C₆-C₁₀-Aryl, Heteroaryl, C₆-C₁₀-Aryl-C₁-C₁₀-alkyl, Benzyl, OR³ oder SR³ stehen oder R¹ und R² in Kombination mit dem P-Atom, an das sie gebunden sind, ein 4- bis 8-gliedriges Ringsystem bilden;
R³ für Wasserstoff, lineares oder verzweigtes C₁-C₁₆-Alkyl, lineares oder verzweigtes C₂-C₁₆-Alkenyl, lineares oder verzweigtes C₂-C₁₆-Alkinyl, C₃-C₁₀-Cycloalkyl, C₆-C₁₀-Aryl, Heteroaryl, C₆-C₁₀-Aryl-C₁-C₁₀-alkyl oder Benzyl steht, und
wobei es sich bei der mindestens einen phosphorhaltigen Gruppe um eine Gruppe der allgemeinen Formel (II) handelt: 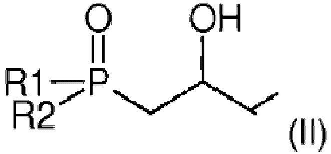 wobei
R1 und R2 für gleiches oder verschiedenes lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl, C₆-C₁₀-Aryl, Heteroaryl, C₆-C₁₀-Aryl-C₁-C₁₀-alkyl, Benzyl, OR³ oder SR³ stehen oder R¹ und R² in Kombination mit dem P-Atom, an das sie gebunden sind, ein 4- bis 8-gliedriges Ringsystem bilden;
R³ für Wasserstoff, lineares oder verzweigtes C₁-C₁₆-Alkyl, lineares oder verzweigtes C₂-C₁₆-Alkenyl, lineares oder verzweigtes C₂-C₁₆-Alkinyl, C₃-C₁₀-Cycloalkyl, C₆-C₁₀-Aryl, Heteroaryl, C₆-C₁₀-Aryl-C₁-C₁₀-alkyl oder Benzyl steht,
wobei es sich bei dem mindestens einen Alkohol um ein Polyol handelt und
wobei der phosphorhaltige Alkohol einen Phosphorgehalt von 3 bis 30 Gew.-%, bezogen auf das Gesamtgewicht des phosphorhaltigen Alkohols, aufweist und
wobei das Polyol aus der Gruppe der Polyetherpolyole, Polyesterpolyole und Mischungen davon ausgewählt wird,
zur Herstellung eines Polyurethans mit verbesserten Entflammbarkeitseigenschaften.

## Revendications

1. Procédé de préparation d'un polyuréthane comprenant la réaction d'au moins un isocyanate (a), d'au moins un polyol (b) et d'au moins un alcool contenant du phosphore comprenant au moins un groupe contenant du phosphore, pouvant être obtenu ou obtenu par un procédé comprenant la réaction d'au moins un alcool avec un composé contenant du phosphore de formule générale (I) : 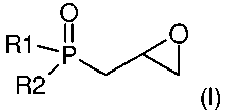 dans lequel
R1, R2 sont, identiques ou différents, alkyle en C₁-C₁₈ linéaire ou ramifié, alcényle en C₂-C₁₈ linéaire ou ramifié, alcynyle en C₂-C₁₈ linéaire ou ramifié, cycloalkyle en C₃-C₁₀, aryle en C₆-C₁₀, hétéroaryle, (aryle en C₆-C₁₀) - (alkyle en C₁-C₁₀), benzyle, OR³, SR³, ou R¹ et R², en combinaison avec l'atome P auquel ils sont liés, forment un système cyclique de 4 à 8 chaînons ;
R³ est hydrogène, alkyle en C₁-C₁₆ linéaire ou ramifié, alcényle en C₂-C₁₆ linéaire ou ramifié, alcynyle en C₂-C₁₆ linéaire ou ramifié, cycloalkyle en C₃-C₁₀, aryle en C₆-C₁₀, hétéroaryle ou (aryle en C₆-C₁₀)-(alkyle en C₁-C₁₀), benzyle, et
dans lequel l'au moins un groupe contenant du phosphore est un groupe de formule générale (II) : 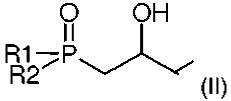 dans lequel
R1, R2 sont, identiques ou différents, alkyle en C₁-C₁₈ linéaire ou ramifié, alcényle en C₂-C₁₈ linéaire ou ramifié, alcynyle en C₂-C₁₈ linéaire ou ramifié, cycloalkyle en C₃-C₁₀, aryle en C₆-C₁₀, hétéroaryle, (aryle en C₆-C₁₀)-(alkyle en C₁-C₁₀), benzyle, OR³, SR³, ou R¹ et R², en combinaison avec l'atome P auquel ils sont liés, forment un système cyclique de 4 à 8 chaînons ;
R3 est hydrogène, alkyle en C₁-C₁₆ linéaire ou ramifié, alcényle en C₂-C₁₆ linéaire ou ramifié, alcynyle en C₂-C₁₆ linéaire ou ramifié, cycloalkyle en C₃-C₁₀, aryle en C₆-C₁₀, hétéroaryle ou (aryle en C₆-C₁₀)-(alkyle en C₁-C₁₀), benzyle,
dans lequel l'au moins un alcool est un polyol et
dans lequel l'alcool contenant du phosphore a une teneur en phosphore de 3 à 30 % en poids sur la base du poids total de l'alcool contenant du phosphore,
dans lequel le polyol est choisi dans le groupe des polyéther-polyols, polyester-polyols, et des mélanges de ceux-ci.

2. Procédé selon la revendication 1, dans lequel le polyuréthane comprend des polyuréthanes modifiés comprenant des structures d'isocyanurate, des structures d'allophanate, des structures d'urée, des structures de carbodiimide, des structures d'urétonimine, et des structures de biuret, ou en outre des adduits d'isocyanate.

3. Procédé selon la revendication 1 ou 2, dans lequel le phosphore est présent sous la forme de groupes phosphate, phosphonate ou phosphinate ou des sels métalliques de ceux-ci.

4. Procédé selon l'une quelconque des revendications 1 à 3, dans lequel l'alcool contenant du phosphore a une fonctionnalité OH de 1 à 8.

5. Procédé selon l'une quelconque des revendications 1 à 4, dans lequel l'alcool contenant du phosphore a un poids moléculaire de 100 à 6000 g/mol.

6. Procédé selon l'une quelconque des revendications 1 à 5, dans lequel l'alcool contenant du phosphore a un indice OH dans la plage de 2 à 800.

7. Procédé selon l'une quelconque des revendications 1 à 6, dans lequel la réaction de l'au moins un alcool avec le composé contenant du phosphore de formule générale (I) est conduite en présence d'un catalyseur.

8. Procédé selon l'une quelconque des revendications 1 à 7, dans lequel l'au moins un alcool contenant du phosphore est utilisé en une quantité de 1 à 30 % du total de l'ensemble es polyols et alcools utilisés.

9. Polyuréthane pouvant être obtenu ou obtenu par un procédé selon l'une quelconque des revendications 1 à 8.

10. Polyuréthane selon la revendication 9, le polyuréthane étant une mousse de polyuréthane, un polyuréthane thermoplastique, un revêtement, un adhésif, un agent de scellement ou un élastomère.

11. Utilisation d'un alcool contenant du phosphore comprenant au moins un groupe contenant du phosphore, pouvant être obtenu ou obtenu par un procédé comprenant la réaction d'au moins un alcool avec un composé contenant du phosphore de formule générale (I) : 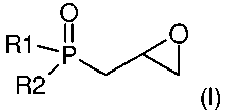 dans lequel
R1, R2 sont, identiques ou différents, alkyle en C₁-C₁₈ linéaire ou ramifié, alcényle en C₂-C₁₈ linéaire ou ramifié, alcynyle en C₂-C₁₈ linéaire ou ramifié, cycloalkyle en C₃-C₁₀, aryle en C₆-C₁₀, hétéroaryle, (aryle en C₆-C₁₀)-(alkyle en C₁-C₁₀), benzyle, OR³, SR³, ou R¹ et R², en combinaison avec l'atome P auquel ils sont liés, forment un système cyclique de 4 à 8 chaînons ;
R³ est hydrogène, alkyle en C₁-C₁₆ linéaire ou ramifié, alcényle en C₂-C₁₆ linéaire ou ramifié, alcynyle en C₂-C₁₆ linéaire ou ramifié, cycloalkyle en C₃-C₁₀, aryle en C₆-C₁₀, hétéroaryle ou (aryle en C₆-C₁₀)-(alkyle en C₁-C₁₀), benzyle, et
dans lequel l'au moins un groupe contenant du phosphore est un groupe de formule générale (II) : 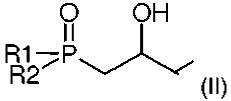 dans lequel
R1, R2 sont, identiques ou différents, alkyle en C₁-C₁₈ linéaire ou ramifié, alcényle en C₂-C₁₈ linéaire ou ramifié, alcynyle en C₂-C₁₈ linéaire ou ramifié, cycloalkyle en C₃-C₁₀, aryle en C₆-C₁₀, hétéroaryle, (aryle en C₆-C₁₀)-(alkyle en C₁-C₁₀), benzyle, OR³, SR³, ou R¹ et R², en combinaison avec l'atome P auquel ils sont liés, forment un système cyclique de 4 à 8 chaînons ;
R³ est hydrogène, alkyle en C₁-C₁₆ linéaire ou ramifié, alcényle en C₂-C₁₆ linéaire ou ramifié, alcynyle en C₂-C₁₆ linéaire ou ramifié, cycloalkyle en C₃-C₁₀, aryle en C₆-C₁₀, hétéroaryle ou (aryle en C₆-C₁₀)-(alkyle en C₁-C₁₀), benzyle,
dans lequel l'au moins un alcool est un polyol et
dans lequel l'alcool contenant du phosphore a une teneur en phosphore de 3 à 30 % en poids sur la base du poids total de l'alcool contenant du phosphore, et
dans lequel le polyol est choisi dans le groupe des polyéther-polyols, polyester-polyols, et des mélanges de ceux-ci
en tant qu'agent ignifuge.

12. Utilisation d'un alcool contenant du phosphore comprenant au moins un groupe contenant du phosphore, pouvant être obtenu ou obtenu par un procédé comprenant la réaction d'au moins un alcool avec un composé contenant du phosphore de formule générale (I) : 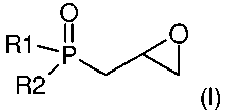 dans lequel
R1, R2 sont, identiques ou différents, alkyle en C₁-C₁₈ linéaire ou ramifié, alcényle en C₂-C₁₈ linéaire ou ramifié, alcynyle en C₂-C₁₈ linéaire ou ramifié, cycloalkyle en C₃-C₁₀, aryle en C₆-C₁₀, hétéroaryle, (aryle en C₆-C₁₀)-(alkyle en C₁-C₁₀), benzyle, OR³, SR³, ou R¹ et R², en combinaison avec l'atome P auquel ils sont liés, forment un système cyclique de 4 à 8 chaînons ;
R³ est hydrogène, alkyle en C₁-C₁₆ linéaire ou ramifié, alcényle en C₂-C₁₆ linéaire ou ramifié, alcynyle en C₂-C₁₆ linéaire ou ramifié, cycloalkyle en C₃-C₁₀, aryle en C₆-C₁₀, hétéroaryle ou (aryle en C₆-C₁₀)-(alkyle en C₁-C₁₀), benzyle, et
dans lequel l'au moins un groupe contenant du phosphore est un groupe de formule générale (II) : 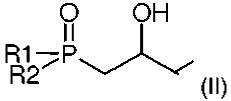 dans lequel
R1, R2 sont, identiques ou différents, alkyle en C₁-C₁₈ linéaire ou ramifié, alcényle en C₂-C₁₈ linéaire ou ramifié, alcynyle en C₂-C₁₈ linéaire ou ramifié, cycloalkyle en C₃-C₁₀, aryle en C₆-C₁₀, hétéroaryle, (aryle en C₆-C₁₀)-(alkyle en C₁-C₁₀), benzyle, OR³, SR³, ou R¹ et R², en combinaison avec l'atome P auquel ils sont liés, forment un système cyclique de 4 à 8 chaînons ;
R³ est hydrogène, alkyle en C₁-C₁₆ linéaire ou ramifié, alcényle en C₂-C₁₆ linéaire ou ramifié, alcynyle en C₂-C₁₆ linéaire ou ramifié, cycloalkyle en C₃-C₁₀, aryle en C₆-C₁₀, hétéroaryle ou (aryle en C₆-C₁₀)-(alkyle en C₁-C₁₀), benzyle,
dans lequel l'au moins un alcool est un polyol et
dans lequel l'alcool contenant du phosphore a une teneur en phosphore de 3 à 30 % en poids sur la base du poids total de l'alcool contenant du phosphore, et
dans lequel le polyol est choisi dans le groupe des polyéther-polyols, polyester-polyols, et des mélanges de ceux-ci
pour la préparation d'un polyuréthane ayant des propriétés d'inflammabilité améliorées.
